(19) Europäisches Patentamt
European Patent Office
Office européen des brevets

(11) **EP 2 141 413 A1**

(12) **EUROPEAN PATENT APPLICATION**

(43) Date of publication:
06.01.2010 Bulletin 2010/01

(51) Int Cl.:
*F23D 17/00* (2006.01)        *F23L 7/00* (2006.01)

(21) Application number: 08172549.1

(22) Date of filing: 22.12.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: L'Air Liquide Société Anonyme pour l'Etude et
l'Exploitation des Procédés Georges Claude
75007 Paris (FR)

(72) Inventors:
• Sanchez-Molinero, Ivan
78000 Versailles (FR)
• Laurent, Jacky
78210 Saint-Cyr l'Ecole (FR)
• Mulon, Jacques
91300 Massy (FR)
• Paubel, Xavier
92290 Chatenay Malabry (FR)
• Recourt, Patrick
91460 Marcoussis (FR)
• Tsiava, Rémi-Pierre
91250 Saint Germain-les-Corbeil (FR)

(74) Representative: Mercey, Fiona Susan
L'AIR LIQUIDE, SOCIETE ANONYME POUR L'ETUDE ET
L'EXPLOITATION DES PROCEDES GEORGES CLAUDE
75 quai d'Orsay
75321 Paris Cédex 07 (FR)

(54) **Method for oxycombustion of pulverized solid fuels**

(57) The invention relates to a method for the oxycombustion of pulverised solid fuels, in which: the first fuel and the oxidizer are injected in such a way as to create a flame, and at least a first portion of the ballast gas is mixed with the second fuel, and injected in such a way that the mixture surrounds the flame created by the first fuel and the oxidizer. The oxidizer may be substantially pure oxygen and the ballast gas may be flue gas. The oxidizer may be air and the ballast gas may be air. The second fuel may be a solid fuel. The ballast gas mixed with the second fuel may have a swirl with regard to the flame.

Figure 2

**Description**

The present invention relates to an oxycombustion burner that can bum solid fuels.

With the increasingly stringent environmental restrictions, particularly in terms of the production of $CO_2$ and $NO_x$, the combustion of a fuel using oxygen or a high-oxygen-content gas is becoming increasingly attractive for the combustion of fossil fuels. However, the conventional combustion devices using air as oxidizer do not always have the geometry, nor the requisite materials, for operating with oxygen or a high-oxygen-content gas. This is because the absence of the nitrogen ballast in high-oxygen or all-oxygen combustion significantly modifies the heat transfer modes, the species concentrations, and the pressure conditions in the combustion chamber.

In order to operate with all-oxygen combustion in these installations, one proposed solution is to reinject flue gas produced by the said combustion or another combustion to partly make up for the absence of nitrogen. This procedure serves to avoid a high production of $NO_x$ due both to the absence of nitrogen, and also to a lower flame temperature than in all-oxygen combustion. However, the reinjected flue gas often nullifies the benefits of oxycombustion, such as, in particular, the lower proportion of unburnts from heavy oil residues, or the decrease of part of the ash, these unburnts and this ash then causing complications in the downstream flue gas treatment method.

It is therefore the object of the present invention to propose a burner suitable for duty in an oxycombustion boiler, and wherein solid fuel may be burned.

A further object of the present invention is to propose a burner that will use substantially pure oxygen as an oxidant, and flue gas as a ballast, and where the solid fuel is blended with at least part of the ballast.

A further object of the present invention is to propose a burner that will use air as an oxidant, and air as a ballast, and where the solid fuel is blended with at least part of the ballast.

A burner configuration with flue gas injection is proposed, that would allow the simultaneous execution of: the maintaining of the advantages of oxycombustion, the obtaining of flame and heat release characteristics appropriate for steam and/or electricity generation boilers, an increase in the commercial value of solid fuels (i.e. petroleum coke, coal, biomass, waste, etc.), and the allowance of an all-air operation case, required for production continuity in situations in which the delivery of oxygen to the burner is interrupted, or for transient modes at low power.

An all-oxygen burner, given the absence of nitrogen in the oxidant, requires only small oxidant injectors. In combustion with air, to maintain the same power at the burner, the equivalent of five times the volume of oxygen would be required, resulting in air velocities such that flame stability can no longer be ensured. It is therefore not possible to maintain the same power as with oxygen, and the permitted power maximum is around one third of the power with oxygen. Certain combustion processes make use of flue gas recirculation. This procedure prevents substantial production of NOx thanks both to the absence of nitrogen but also to a lower flame temperature than in all-oxygen combustion.

However, when fuels that are more difficult to bum are used, such as liquid fuels, heavy oils or even petroleum residues, and in the case of solid fuels of low reactivity (i.e. coal or lignite with a high moisture content), the same problems as in combustion with air are encountered, especially those associated with a low combustion temperature, like the content of unburnt materials in the flue gases. Moreover, when the fuel contains sulphur, which is often the case, mixing oxygen with the SOx-laden flue gas may result in temperatures below the dew point and could cause condensation to occur, causing sulphur to be deposited that will corrode the mixing boxes.

Flue gas injection typiucally takes place in one of two ways. The first method is by mixing the flue gas with oxygen before being introduced into the burner, so as to reconstruct an oxidant having an oxygen content of around 21% and essentially $CO_2$ as ballast instead of nitrogen. One advantage that may be found with this solution in the case of converting an air boiler is the possibility of keeping the air burners with operating arrangements that are not too rough. With the second method, the flue gas may also be injected independently, either at a certain point in the combustion chamber or via the burner. In the latter case, flue gas injection takes place at a velocity such that it extends the flame via which overheats the opposite walls. To prevent the flame from turning back along the axis, low flue gas injection velocities must be used, this having the effect of increasing the size of the burner and creating position problems, whereas it is well known that the surfaces of the chamber to be heated must be maximized.

The present invention provides the solution to injecting flue gas via the oxygen burner. This flue gas may come from any source, but may also come from the recycling of all or part of the flue gas discharged by the combustion chamber itself. This oxygen burner operates with an adjustable recycle rate and may burn, in its core, both liquid and gaseous fuel, or even fuel that is solid at room temperature but liquid under certain conditions. At the same time, solid fuel may be fed into the burner. All the fluids may be heated before being injected.

This solid fuel may be fed into the burner in various ways. First as a suspension in a gas. The means for suspending the solid fuel in air are well known in the prior art and widely used in coal-burning boilers. In the case of oxi-combustion, this gas could consist of recycled flue gases with the appropriate charge ratio (kg of fuel per $Sm^3$ of gas) and with the appropriate temperature. An additional variant is to consider this flue gas before or after condensation of water that it contains. Without condensation, the overall efficiency of the power station and the economics are improved, and with prior condensation, concerns over sintering the solid fuel are avoided.

The second way that solid fuel may be fed into a burner is in suspension in a liquid, for example water or another combustible liquid at the injection temperature. At the same time, an emulsifier may be added to reduce the viscosity of the assembly. A third way that solid fuel may be fed into a burner is in the liquefied state, either through the effect of the injection temperature or by addition of emulsifiers.

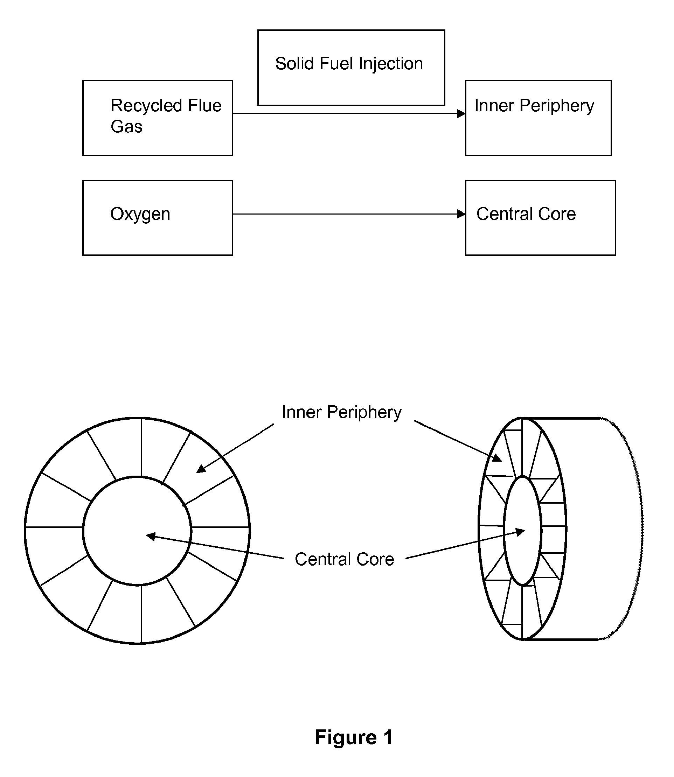

Turning now Figure 1, the inventive burner is made up of a central part called "central core" for the injection of substantially pure oxygen and fuel, and a peripheral device that may receive and inject flue gas without disturbing the operation of the oxygen flame. This central core may burn gas and/or liquid fuel independently of the injected recycle. If it is designed to use a solid fuel (in addition to gaseous and/or liquid fuels), some of the recycled flue gas may serve as transport gas for conveying the suspended solid fuel. The central core is any combustion system or burner employing fuel and substantially pure oxygen. This combustion system may be a coaxial configuration as a configuration with separate jets, which are symmetrical without the velocity distinction.

If this injection of suspended solid fuel takes place in the form of a ring, this will preferably be located near the closest oxygen intake, so as to profit from the advantages of oxi-combustion. Finally, the intake of the rest of the recycled flue gas may take place at a more remote intake. As indicated in Figure 1, the suspended solid fuel is conveyed to the burner with a single main flow rate of recycled flue gas, identified as the inner periphery. This suspended solid fuel may be the same fuel that is burned in the central core, or it may be a second fuel, different from that which is burned in the central core. The inner periphery may be equipped with a swirl device with a swirl factor of between 0.26 and 1.73, which makes the fluid rotate.

The swirl factor S is defined here as follows:

$$S = M_t/M_a$$

Where $M_t$ and $M_a$ are the tangential momentum and axial momentum, respectively, of the swirling fluid.

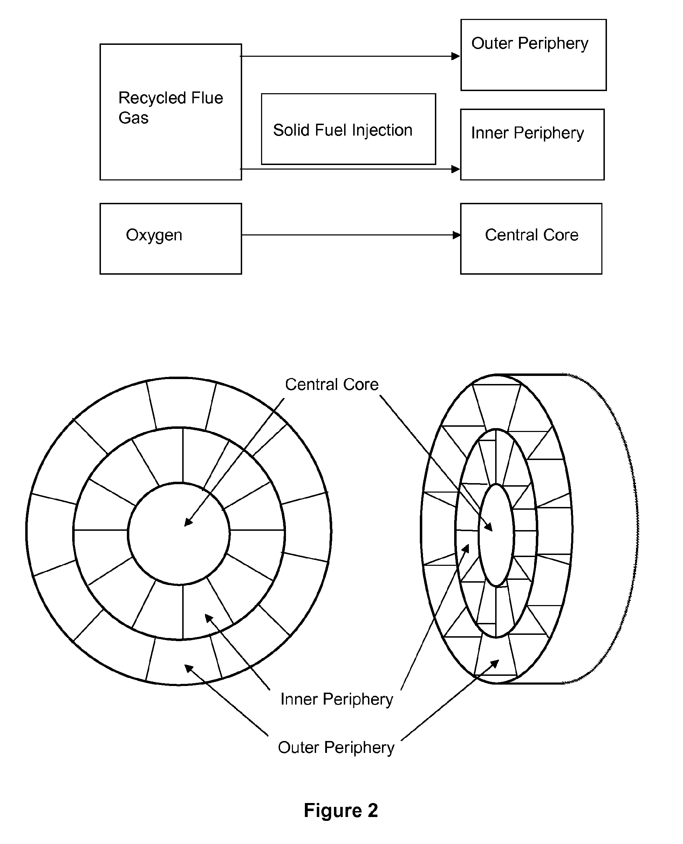

Turning to Figure 2, another embodiment of the present invention is presented in which the peripheral device is made up of two parts: an "inner periphery" and an "outer periphery", both being located away from the central core. These two parts may be adjacent or may be separated by a partition. The inner periphery is that through which the suspended solid fuel may be injected. The inner periphery may be equipped with a swirl device with a swirl factor of between 0.26 and 1.73, which makes the fluid rotate. The outer periphery may also be equipped with a swirl device, which rotates the recycled flue gas fluid that passes through it. The swirls may have different rotation senses and directions.

One embodiment of this burner may be made in a coaxial configuration in which the burner is composed of a succession of tubes fitted one into another. This burner with a coaxial configuration is made up, as shown in Figure 1, of an all-oxygen "central core" and a peripheral device in the form of a ring around the central core.

During operation with substantially pure oxygen, the recycled flue gas occupies the inner peripheral part and the outer peripheral part. Thus, the recycled flue gas does not disturb the flame obtained with all-oxygen combustion, but creates, near the burner, a corridor that protects the walls of the boiler from excessively intense radiation, then, on progressively moving away from the face of the burner, the recycled flue gas and the newly created hot gases mix together to form now only a homogenous mixture starting from the middle of the combustion chamber.

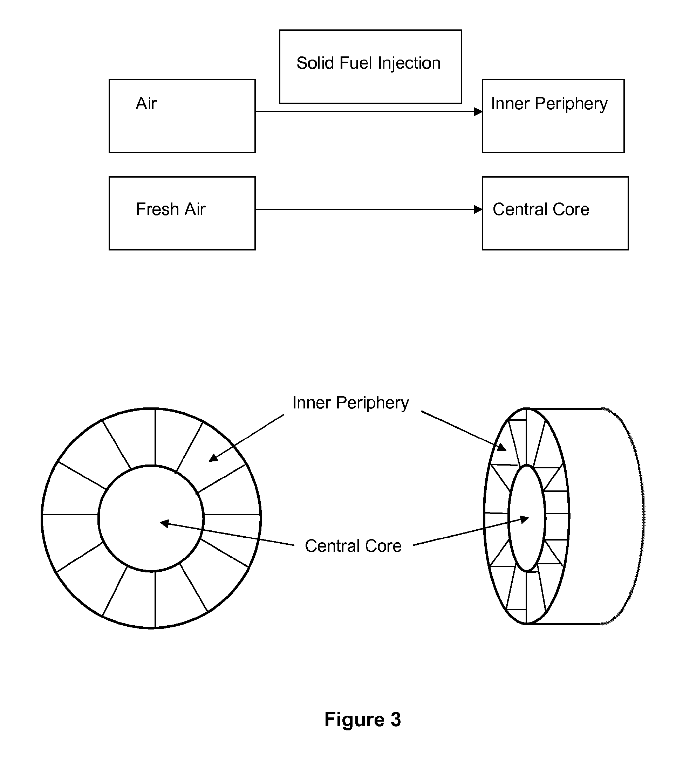

In operation with air, the flue gas is not recirculated. As indicated in Figure 3, the oxidant will be air and this will be conducted into the peripheral device instead of the recirculated flue gas. A portion may also be directed into the central core in order to avoid any flash-back and combustion gas from the combustion chamber getting back into the burner, and it will also enter into the reduction of air for the combustion. To avoid any risk of clogging of the pipes through which the pure oxygen must pass, attention must be paid to injecting this air into the core of the burner as close as possible to the burner (so as to reduce the common use of piping) and to use fresh air with a low content of dust and pollutants.

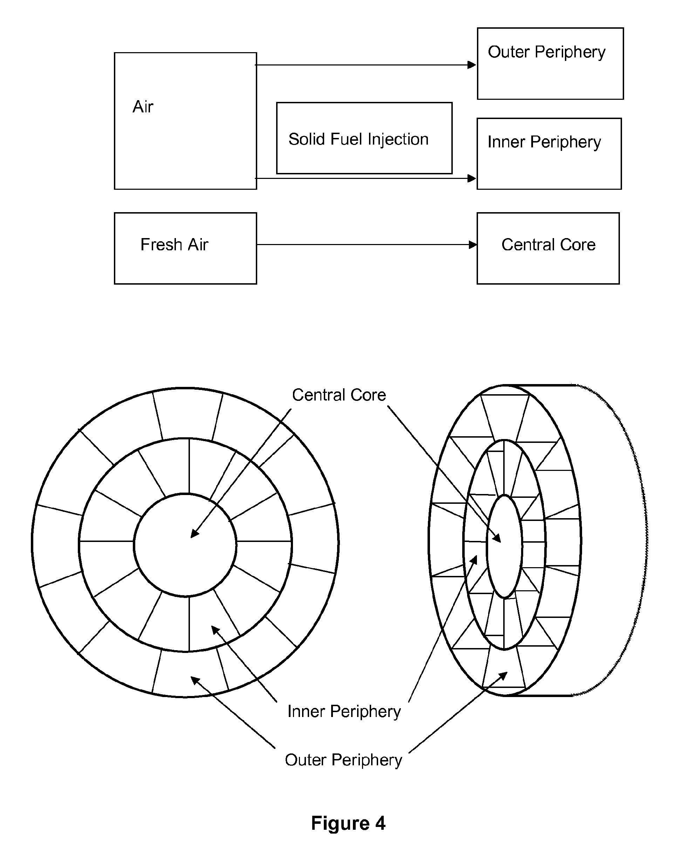

In the embodiment presented in Figure 3, all of the peripheral air will be used to transport the solid fuel into the combustion chamber. In the embodiment presented in Figure 4, a fraction of the peripheral air injection will bring the solid fuel in suspension before being injected into the combustion chamber, whereas the other fraction will be injected directly.

**Claims**

1. A method of combustion of a first fuel and a second fuel, using at least one oxidizer and a ballast gas, in which:

   • the first fuel and the oxidizer are injected in such a way as to create a flame,
   • at least a first portion of the ballast gas is mixed with the second fuel, and injected in such a way that the mixture surrounds the flame created by the first fuel and the oxidizer.

2. The method of claim 1, wherein the oxidizer is substantially pure oxygen and the ballast gas is flue gas.

**EP 2 141 413 A1**

**3.** The method of claim 1, wherein the oxidizer is air and the ballast gas is air.

**4.** The method of any of the above claims, wherein the second fuel is a solid fuel.

**5.** The method of any above claims, wherein the ballast gas mixed with the second fuel has a swirl with regard to the flame.

**6.** The method of claim 4, wherein the ballast gas mixed with the second fuel has a swirl factor of between 0.26 and 1.73.

**7.** The method of claim 1, wherein:

   • a second portion of the ballast gas is injected in such a way that it surrounds the first portion of the ballast gas mized with the second fuel, and the flame create by the first fuel and the oxidizer.

**8.** The method of claim 7, wherein the second portion of ballast gas has a swirl with regard to the flame, and has a different rotation sense and direction to ballast gas mixed with the second fuel.

**9.** The method of claim 7, wherein the second portion of ballast gas has a swirl factor of between 0.26 and 1.73.

Solid Fuel Injection

Recycled Flue Gas → Inner Periphery

Oxygen → Central Core

Inner Periphery

Central Core

**Figure 1**

Recycled Flue Gas

Solid Fuel Injection

Oxygen

Outer Periphery

Inner Periphery

Central Core

Central Core

Inner Periphery

Outer Periphery

**Figure 2**

Solid Fuel Injection

Air → Inner Periphery

Fresh Air → Central Core

Inner Periphery

Central Core

**Figure 3**

Figure 4

Europäisches
Patentamt

European
Patent Office

Office européen
des brevets

## EUROPEAN SEARCH REPORT

Application Number

EP 08 17 2549

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 711 952 A2 (MITSUBISHI HEAVY IND LTD [JP]) 15 May 1996 (1996-05-15) * the whole document * | 1,3-5, 7-8 | INV. F23D17/00 F23L7/00 |
| X | EP 1 936 270 A2 (AIR PROD & CHEM [US]) 25 June 2008 (2008-06-25) * claims 1,10,13,16,18,21; figures 1,2,5,7 * * paragraphs [0001] - [0003], [0014] - [0031], [0034] - [0036], [0055] - [0064], [0067], [0069] - [0072] * | 1-2,4-5 | |
| X | US 4 474 120 A (ADRIAN FRITZ [DE] ET AL) 2 October 1984 (1984-10-02) * the whole document * | 1,3-4,7 | |
| X | EP 0 756 134 A1 (LENTJES KRAFTWERKSTECHNIK [DE] BBP ENERGY GMBH [DE]) 29 January 1997 (1997-01-29) * the whole document * | 1,3-4 | |
| X | US 4 748 919 A (CAMPOBENEDETTO EDWARD J [US] ET AL) 7 June 1988 (1988-06-07) * the whole document * | 1,3-4 | TECHNICAL FIELDS SEARCHED (IPC) F23D F23L |
| X | WO 03/050449 A1 (CEMEX INC [US]) 19 June 2003 (2003-06-19) * paragraphs [0002], [0006], [0019], [0025] - [0027], [0029] - [0033] * * figure 5 * | 1,3-4 | |
| X | GB 2 070 761 A (KAWASAKI HEAVY IND LTD) 9 September 1981 (1981-09-09) * the whole document * | 1,3-4 | |

-/--

The present search report has been drawn up for all claims

| Place of search | Date of completion of the search | Examiner |
|---|---|---|
| Munich | 5 August 2009 | Vogl, Paul |

EPO FORM 1503 03.82 (P04C01)

European Patent Office
Office européen des brevets

**EUROPEAN SEARCH REPORT**

Application Number

EP 08 17 2549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/107209 A1 (SARGAS AS [NO]; CHRISTENSEN TOR [NO]; FLEISCHER HENRIK [NO]; BOERSETH) 12 October 2006 (2006-10-12) * page 4, line 16 - page 5, line 6 * * page 6, line 31 - page 7, line 22 * * page 9, lines 9-15 * * page 14, lines 7-20 * * page 15, lines 1-8,16-19 * * claims 1,7,13-16; figure 2 * ----- | 1-2,4-5, 7-8 | |
| A | US 4 545 307 A (MORITA SHIGEKI [JP] ET AL) 8 October 1985 (1985-10-08) * the whole document * ----- | 1-5,7-8 | |

TECHNICAL FIELDS
SEARCHED (IPC)

The present search report has been drawn up for all claims

| Place of search | Date of completion of the search | Examiner |
|---|---|---|
| Munich | 5 August 2009 | Vogl, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 17 2549

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2009

| Patent document cited in search report | | Publication date | Patent family member(s) | | Publication date |
|---|---|---|---|---|---|
| EP 0711952 | A2 | 15-05-1996 | AT | 206194 T | 15-10-2001 |
| | | | CA | 2162244 A1 | 15-05-1996 |
| | | | CZ | 9503000 A3 | 15-05-1996 |
| | | | CZ | 293962 B6 | 18-08-2004 |
| | | | DE | 69522895 D1 | 31-10-2001 |
| | | | DE | 69522895 T2 | 11-04-2002 |
| | | | DK | 711952 T3 | 21-01-2002 |
| | | | ES | 2163468 T3 | 01-02-2002 |
| | | | FI | 955462 A | 15-05-1996 |
| | | | HU | 72852 A2 | 28-05-1996 |
| | | | NO | 954561 A | 15-05-1996 |
| | | | PL | 311363 A1 | 27-05-1996 |
| | | | PT | 711952 E | 28-03-2002 |
| | | | US | 6116171 A | 12-09-2000 |
| EP 1936270 | A2 | 25-06-2008 | CA | 2608054 A1 | 24-04-2008 |
| | | | CN | 101169243 A | 30-04-2008 |
| | | | KR | 20080036935 A | 29-04-2008 |
| | | | SG | 142245 A1 | 28-05-2008 |
| | | | US | 2008184919 A1 | 07-08-2008 |
| US 4474120 | A | 02-10-1984 | AU | 8077782 A | 02-09-1982 |
| | | | DE | 3107649 A1 | 11-11-1982 |
| | | | GB | 2093979 A | 08-09-1982 |
| | | | JP | 57161420 A | 05-10-1982 |
| | | | ZA | 8201193 A | 26-01-1983 |
| EP 0756134 | A1 | 29-01-1997 | AU | 727761 B2 | 21-12-2000 |
| | | | AU | 5461196 A | 30-01-1997 |
| | | | CA | 2175113 A1 | 26-01-1997 |
| | | | CN | 1152686 A | 25-06-1997 |
| | | | DE | 19527083 A1 | 30-01-1997 |
| | | | DK | 756134 T3 | 06-11-2000 |
| | | | ES | 2149402 T3 | 01-11-2000 |
| | | | JP | 9042611 A | 14-02-1997 |
| | | | PL | 314866 A1 | 03-02-1997 |
| | | | RU | 2147708 C1 | 20-04-2000 |
| | | | US | 5832847 A | 10-11-1998 |
| | | | ZA | 9603667 A | 20-11-1996 |
| US 4748919 | A | 07-06-1988 | NONE | | |
| WO 03050449 | A1 | 19-06-2003 | AU | 2002346728 A1 | 23-06-2003 |
| GB 2070761 | A | 09-09-1981 | DE | 3106824 A1 | 03-12-1981 |
| | | | DE | 8105115 U1 | 01-10-1981 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 08 17 2549

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2009

| Patent document cited in search report | | Publication date | Patent family member(s) | | Publication date |
|---|---|---|---|---|---|
| GB 2070761 | A | | JP | 1302748 C | 14-02-1986 |
| | | | JP | 56119406 A | 19-09-1981 |
| | | | JP | 60026922 B | 26-06-1985 |
| WO 2006107209 | A1 | 12-10-2006 | CA | 2603529 A1 | 12-10-2006 |
| | | | EP | 1871993 A1 | 02-01-2008 |
| | | | JP | 2008534862 T | 28-08-2008 |
| | | | US | 2009025390 A1 | 29-01-2009 |
| US 4545307 | A | 08-10-1985 | AU | 570249 B2 | 10-03-1988 |
| | | | AU | 2915684 A | 31-10-1985 |
| | | | DE | 3485248 D1 | 12-12-1991 |
| | | | EP | 0160146 A2 | 06-11-1985 |
| | | | FI | 851263 A | 24-10-1985 |
| | | | IN | 164394 A1 | 11-03-1989 |
| | | | JP | 1750459 C | 08-04-1993 |
| | | | JP | 4039564 B | 30-06-1992 |
| | | | JP | 60226609 A | 11-11-1985 |
| | | | NO | 851597 A | 24-10-1985 |
| | | | ZA | 8501121 A | 30-10-1985 |

EPO FORM P0459

For more details about this annex : see Official Journal of the European Patent Office, No. 12/82